# EUROPEAN PATENT APPLICATION

(11) **EP 4 459 532 A1**
(43) Date of publication of application: **06.11.2024**
(21) Application number: 22913953.0
(22) Date of filing: 28.11.2022
(51) Int. Cl.: G06Q 20/36

(54) **DIGITAL CURRENCY TRANSACTION METHOD, APPARATUS, ELECTRONIC DEVICE, AND COMPUTER-READABLE MEDIUM**

(30) Priority: 31.12.2021 CN 202111667222
(71) Applicant: Digital Currency Institute, The People's Bank of China, Beijing 100071 (CN)
(72) Inventor: MU, Changchun, Beijing 100071 (CN); DI, Gang, Beijing 100071 (CN); LV, Yuan, Beijing 100071 (CN); ZHAO, Xinyu, Beijing 100071 (CN); ZHANG, Zhan, Beijing 100071 (CN); CUI, Peidong, Beijing 100071 (CN); ZHANG, Mingming, Beijing 100071 (CN); PENG, Meiling, Beijing 100071 (CN); CHEN, Song, Beijing 100071 (CN)
(74) Representative: Casalonga
(86) International application number: PCT/CN2022/134773
(87) International publication number: WO 2023/124695

(57) **Abstract**

Disclosed are a digital currency transaction method, apparatus and electronic device, and a computer-readable medium, which relate to the technical field of digital currencies. The method includes: receiving a transaction request in response to a connection to a digital currency wallet, and acquiring feature negotiation information from a hardware carrier of the digital currency wallet; determining a transaction type on a basis of the feature negotiation information; acquiring a deduction amount corresponding to the transaction request, and generating an interoperability-based transaction request on a basis of the deduction amount and the feature negotiation information in response to determining that the transaction type is an interoperability-based transaction; sending the interoperability-based transaction request to an interoperability platform, so as to invoke a corresponding operator interface by means of the interoperability platform to send the interoperability-based transaction request to a corresponding digital currency operator; and receiving deduction information generated after the digital currency operator executes deduction on a basis of the interoperability-based transaction request, and outputting the deduction information. Limitations of capacity and an algorithm capability of front-end currency string storage are solved

## Description

### Cross-Reference to Related Application

The present disclosure claims the priority to Chinese Patent Application No. 202111667222.5, filed on December 31, 2021 and entitled "Digital currency transaction Method, apparatus and electronic device, and computer-readable medium", which is incorporated as part or entirety of the present disclosure herein by reference.

### Technical Field

The present disclosure relates to the technical field of digital currencies, and in particular to a digital currency transaction method, apparatus and electronic device, and a computer-readable medium.

### Background

There are a variety of digital currencies, and digital renminbi that is being piloted is a specific form of application. At present, the majority of digital currency wallets on the market are based on a software system. Even with a hardware-based front-end currency string storage solution, the capacity and algorithm capability of the hardware are also extremely limited, resulting in an incapability of satisfying diverse business requirements of a user well.

### Summary

In view of this, examples of the present disclosure provide a digital currency transaction method, apparatus and electronic device, and a computer-readable medium.

According to one aspect of an example of the present disclosure, a digital currency transaction method is provided. The method is applied to a terminal, and includes:
receiving a transaction request in response to a connection to a digital currency wallet, and acquiring feature negotiation information from a hardware carrier of the digital currency wallet;
determining a transaction type on the basis of the feature negotiation information;
acquiring a deduction amount corresponding to the transaction request, and generating an interoperability-based transaction request on the basis of the deduction amount and the feature negotiation information in response to determining that the transaction type is an interoperability-based transaction;
sending the interoperability-based transaction request to an interoperability platform, so as to invoke a corresponding operator interface by means of the interoperability platform to send the interoperability-based transaction request to a corresponding digital currency operator; and
receiving deduction information generated after the digital currency operator executes deduction on the basis of the interoperability-based transaction request, and outputting the deduction information.

In addition, according to one aspect of an example of the present disclosure, a digital currency transaction method is provided. The method is applied to a digital currency operator, and includes:
receiving an operator transaction request, and determining a balance of a corresponding digital currency wallet and a deduction amount according to the operator transaction request; and
determining a type of the digital currency wallet, executing deduction of the digital currency wallet according to the type of the digital currency wallet, the balance of the digital currency wallet and the deduction amount, generating and returning deduction information.

In addition, according to another aspect of an example of the present disclosure, a digital currency transaction apparatus is provided. The apparatus is arranged in a terminal, and includes:
a receiving unit, configured to receive a transaction request in response to a connection to a digital currency wallet, and acquire feature negotiation information from a hardware carrier of the digital currency wallet;
a transaction type determining unit, configured to determine a transaction type on the basis of the feature negotiation information;
a request generating unit, configured to acquire a deduction amount corresponding to the transaction request, and generate an interoperability-based transaction request on the basis of the deduction amount and the feature negotiation information in response to determining that the transaction type is an interoperability-based transaction;
a sending unit, configured to send the interoperability-based transaction request to an interoperability platform, so as to invoke a corresponding operator interface by means of the interoperability platform to send the interoperability-based transaction request to a corresponding digital currency operator; and
an outputting unit, configured to receive deduction information generated after the digital currency operator executes deduction on the basis of the interoperability-based transaction request, and output the deduction information.

In addition, according to another aspect of an example of the present disclosure, a digital currency transaction apparatus is provided. The apparatus is arranged in a digital currency operator, and includes:
a receiving unit, configured to receive an operator transaction request, and determine a balance of a corresponding digital currency wallet and a deduction amount according to the operator transaction request; and
a deduction executing unit, configured to determine a type of the digital currency wallet, execute deduction of the digital currency wallet according to the type of the digital currency wallet, the balance of the digital currency wallet and the deduction amount, generate and return deduction information.

In addition, according to another aspect of an example of the present disclosure, a digital currency transaction electronic device is provided. The digital currency transaction electronic device includes: one or more processors; and a storage apparatus, configured to store one or more programs, where the one or more processors implement the digital currency transaction method of any example described above when executing the one or more programs.

In addition, according to another aspect of an example of the present disclosure, a computer-readable medium is further provided. The computer-readable medium stores a computer program, where the program implements the digital currency transaction method of any example described above when executed by a processor.

Further effects of the non-conventional alternatives described above will be explained below in combination with the particular embodiments.

### Brief Description of the Drawings

The accompanying drawings are used to better understand the present disclosure and do not be construed as unduly limiting the present disclosure. In the figures,
Fig. 1 is a schematic diagram of a main flow of a digital currency transaction method according to Example 1 of the present disclosure;
Fig. 2 is a schematic diagram of a transaction flow of a quasi-account mode digital currency hardware wallet of a digital currency transaction method according to an example of the present disclosure;
Fig. 3 is a schematic diagram of a parent-child ownership relation of a quasi-account mode digital currency hardware wallet of a digital currency transaction method according to an example of the present disclosure;
Fig. 4 is a schematic diagram of management of a quasi-account mode digital currency hardware wallet by a mobile phone client application (APP) of a digital currency transaction method according to an example of the present disclosure;
Fig. 5 is a schematic diagram of feature negotiation between a quasi-account mode digital currency wallet and a point-of-sale (POS) terminal of a digital currency transaction method according to an example of the present disclosure;
Fig. 6 is a schematic diagram of a main flow of a digital currency transaction method according to Example 2 of the present disclosure;
Fig. 7 is a schematic diagram of a main flow of a digital currency transaction method according to Example 3 of the present disclosure;
Fig. 8 is a schematic diagram of a main flow of a digital currency transaction method according to Example 4 of the present disclosure;
Fig. 9 is a schematic diagram of main units of a digital currency transaction apparatus according to an example of the present disclosure; and
Fig. 10 is a schematic diagram of main units of a digital currency transaction apparatus according to an example of the present disclosure

### Detailed Description of the Embodiments

Exemplary examples of the present disclosure are described below in combination with the accompanying drawings, including various details of the examples of the present disclosure to facilitate understanding, which should be considered as exemplary only. Thus, those of ordinary skill in the art should realize that various changes and modifications can be made to the examples described herein without departing from the scope and spirit of the present disclosure. Likewise, descriptions of well-known functions and structures are omitted in the following description for clarity and conciseness. The acquiring, storage, use, and processing of data in the technical solution of the present disclosure comply with relevant national laws and regulations.

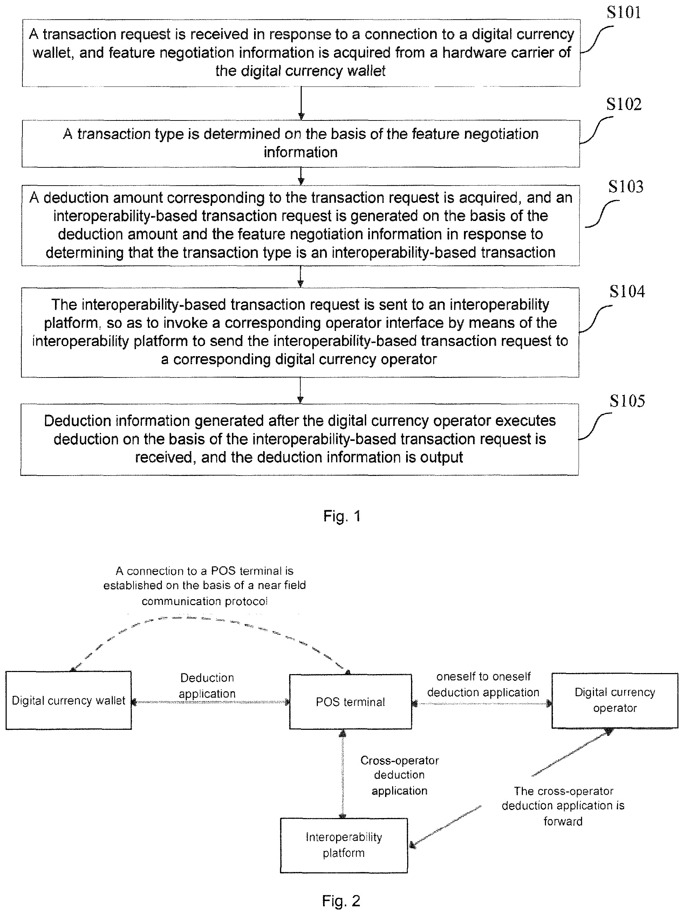

Fig. 1 is a schematic diagram of a main flow of a digital currency transaction method according to Example 1 of the present disclosure. As shown in Fig. 1, the digital currency transaction method is applied to a terminal, and includes:
S101, a transaction request is received in response to a connection to a digital currency wallet, and feature negotiation information is acquired from a hardware carrier of the digital currency wallet.

As shown in Fig. 2, a digital currency wallet, a point-of-sale (POS) terminal, a digital currency operator and an interoperability platform are involved in a digital currency transaction. The digital currency wallet is a quasi-account mode digital currency hardware wallet, which provides a digital currency wallet that records a value of a digital currency in a form of an account and does not establish an association relation between an identity of a user and the value of the digital currency in the account. Moreover, the digital currency wallet uses a security chip as a storage medium, performs a single offline transaction on the POS terminal, and performs tiled reading and writing management by means of a mobile phone client. Limitations of capacity and an algorithm capability of front-end currency string storage are solved, and use of a mobile phone of the user without a network side can also be satisfied. Moreover, the user may select to use the digital currency wallet anonymously or use the digital currency wallet in the form of the real name to fully safeguard privacy rights and interests of the user. The digital currency wallet of the example of the present disclosure establishes a connection to the POS terminal by means of a near field communication (NFC) protocol to acquire feature negotiation information in a hardware carrier, and whether the digital currency wallet belongs to the present operator is determined according to the feature negotiation information. If the digital currency wallet belongs to the present operator, the digital currency wallet is processed directly according to an oneself to oneself transaction mode (the oneself to oneself transaction mode is that an execution body directly sends a deduction application to a digital currency operator to execute corresponding deduction by means of the digital currency operator). If the digital currency wallet is cross-operator, a cross-operator payment application is forwarded to the digital currency operator by means of the interoperability platform of a central bank. After deduction, a payment wallet operator returns to the POS terminal in an original way. If deduction exceeds a password-free limit, the user is needed to input a hardware wallet payment password at the POS terminal.

In the example, the execution body (which may be terminal devices such as the POS terminal or a mobile phone client application (APP), for example) of the digital currency transaction method may establish the connection to the hardware carrier arranged in the digital currency wallet by means of a wired connection or a wireless connection. After determining to be connected to the digital currency wallet, the execution body receives a transaction request initiated by the user, and may send an encrypted deduction application message to the hardware carrier in the digital currency wallet. After receiving the encrypted deduction application message, the hardware carrier in the digital currency wallet performs corresponding decryption processing, and returns a processing result message to the execution body. The result message may carry feature negotiation information. The execution body may acquire the feature negotiation information in the processing result message sent by the hardware carrier of the digital currency wallet. The feature negotiation information may include identifiers of digital currency operators corresponding to both parties of transaction (or multiple parties of transaction). Whether the transaction is a transaction between the same digital currency operators or a transaction between different digital currency operators may be determined by means of the feature negotiation information. Exemplarily, the feature negotiation information may include information such as an operator identifier G corresponding to a digital currency wallet account opened by a seller and an operator identifier H corresponding to a digital currency wallet account of a purchaser. After acquiring the feature negotiation information in the hardware carrier in the digital currency wallet, the execution body sends a transaction application to a background, the background performs encryption processing on the transaction application to obtain a message, and sends the message to the corresponding digital currency operator. After receiving the message, the corresponding digital currency operator decrypts the message, completes deduction processing, and returns a result to the execution body.

For example, before the step of receiving a transaction request, the digital currency transaction method further includes: establishing a connection to the digital currency wallet by means of an NFC protocol or a Bluetooth connection technology.

The execution body may receive the transaction request after establishing the connection to the digital currency wallet. Exemplarily, the execution body may provide a tiled reading and writing management service, read the digital currency wallet on the basis of the NFC protocol, bind the digital currency wallet to a personal digital wallet, receive a transaction request initiated by the digital currency wallet anytime and anywhere, and execute recharge and management on the digital currency wallet according to the transaction request. The recharge and management includes functions of cash-in, cash-out, password management, cancellation, application update, limit management, small-amount password-free management, loss reporting and removal of reported loss, etc. It should be pointed out that the digital currency wallet in the example of the present disclosure is a quasi-account mode hardware wallet. For example, in the case of quasi-account, the meaning of digital renminbi based on a quasi-account mode is that an operator records a value of the digital renminbi in a form of an account, but does not establish an association relation between the identity of the user and the value of the digital renminbi in the account. A digital renminbi product in the quasi-account mode is issued for an unidentified user, and a payment process is consistent with an account mode. A quasi-account mode hardware wallet is mainly characterized in that the value of the digital currency is recorded in the form of the account, the feature negotiation information of the wallet is stored in the hardware carrier, the association relation between the identity of the user and the value of the digital currency in the account is not established during issuance, the quasi-account mode hardware wallet may be recharged by means of a parent wallet associated, and a consumption amount may be displayed on a display screen during consumption on the terminal.

As at least one alternative embodiment, after the step of receiving a transaction request, the method further includes following operations.

A feature negotiation request is sent to the digital currency wallet; transaction parameters returned by the digital currency wallet are received; a corresponding transaction model is determined on the basis of the transaction parameters; and a transaction process based on the transaction request is executed on the basis of the transaction model.

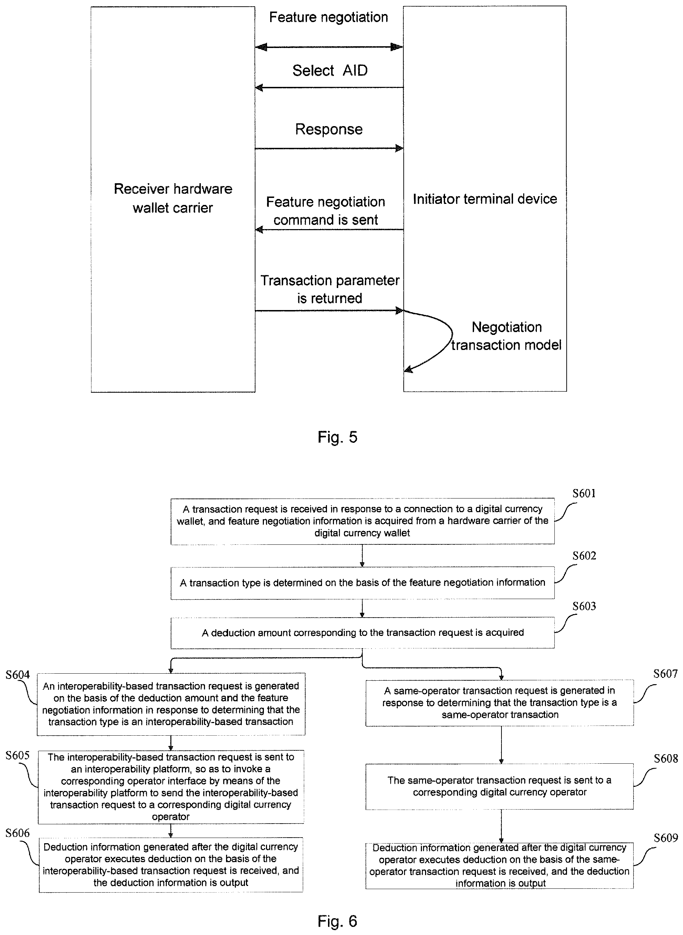

Exemplarily, as shown in Fig. 5, an execution body (initiator, for example, a terminal device) initiates feature negotiation to a receiver, for example, a hardware wallet carrier (i.e. a hardware carrier in a digital currency wallet in the present disclosure), sends a feature negotiation command, sends a selection application identifier SelectAID to the receiver (hardware wallet carrier), and receives a response returned by the hardware wallet carrier. The response carries transaction parameters. Exemplarily, the transaction parameters may be application parameters selected by the receiver (hardware wallet carrier). For example, the application parameters may include parameters such as expression version information, application version information, a transaction model, a terminal type, a networking capability, etc. A fast transaction model may be rapidly selected by means of a feature negotiation process.

In the example of the present disclosure, before the digital currency wallet executes transaction, a feature negotiation mechanism is added to carry out version negotiation, interactive capability parameter exchange and subsequent function expansion. Features of this transaction between both parties are determined by means of negotiation, and the features include parameters such as expression version information, application version information, a transaction model, a terminal type, a networking capability, etc. A fast transaction model may be rapidly selected by means of a feature negotiation process.

S102, a transaction type is determined on the basis of the feature negotiation information.

The feature negotiation information may include information such as an operator identifier G corresponding to a digital currency wallet account opened by a seller and an operator identifier H corresponding to a digital currency wallet account of a purchaser. The seller may be a merchant, and the purchaser may be a consumer. Objects associated with the feature negotiation information may be a digital currency operator identifier corresponding to a user A and a digital currency operator identifier corresponding to a user B who transacts with the user A. When the digital currency operator identifier corresponding to the user A is the same as the digital currency operator identifier corresponding to the user B who transacts with the user A, the execution body may determine that the transaction type is a same-operator transaction. When the digital currency operator identifier corresponding to the user A is different from the digital currency operator identifier corresponding to the user B who transacts with the user A, the execution body may determine that the transaction type is an interoperability-based transaction. For example, the feature negotiation information may further include information of an encrypted payment amount, whether to pay in installments, etc. The content included in the feature negotiation information is not limited in the example of the present disclosure.

Exemplarily, when the digital currency operator identifier corresponding to the user A in the feature negotiation information is different from the digital currency operator identifier corresponding to the user B who transacts with the user A, the digital currency transaction executed is as follows: the user A opens a digital currency wallet in a bank a and converts 100 yuan from a personal bank account of a bank b into the digital currency wallet, and then pays the money to a merchant B by means of the digital currency wallet, while a digital currency wallet received by a merchant B is opened in the bank b, and the money is converted back to a personal bank account of the bank b of the merchant B. Thus, the specific capital flow may be as follows: the digital currency operator, bank a, of the user A confirms capital inventory in a digital currency bank vault of the bank a, and then feeds back information to a registration center of the central bank. The central bank changes an owner of 100 yuan digital currency from the capital vault of the bank a to the user A. When the user A pays 100 yuan to the user B, the digital currency operator, bank b, of the user B confirms a digital currency bank capital vault inventory of the bank b, and then feeds back information to the registration center of the central bank. The registration center changes the owner of 100 yuan digital currency from the user A to the user B. When the user B deposits 100 yuan into the bank account of the bank b, the bank b feeds back information to the registration center of the central bank, and then the central bank cancels 100 yuan digital currency from the digital currency bank capital vault of the bank b and records the cancelation, and restores a digital currency exchange limit of 100 yuan in the bank b.

S103, a deduction amount corresponding to the transaction request is acquired, and an interoperability-based transaction request is generated on the basis of the deduction amount and the feature negotiation information in response to determining that the transaction type is an interoperability-based transaction.

When determining that the transaction type is the interoperability-based transaction according to the feature negotiation information, the execution body may generate a request (i.e. interoperability-based transaction request) for a cross-operator deduction application as shown in Fig. 2 according to the deduction amount corresponding to the acquired transaction request and send the request for a cross-operator deduction application to the interoperability platform. The interoperability platform is responsible for interoperability of digital currency wallets of different operators.

S104, the interoperability-based transaction request is sent to an interoperability platform, so as to invoke a corresponding operator interface by means of the interoperability platform to send the interoperability-based transaction request to a corresponding digital currency operator.

After sending the interoperability-based transaction request to the interoperability platform, the execution body may forward by the interoperability platform the interoperability-based transaction request (i.e. forward the cross-operator deduction application in Fig. 2) to the digital currency operator corresponding to the digital currency wallet to be deducted. Digital currency strings are stored in a background system of the digital currency operator and are configured to pay the digital currency.

S105, deduction information generated after the digital currency operator executes deduction on the basis of the interoperability-based transaction request is received and output.

After sending the interoperability-based transaction request to the digital currency operator, the execution body may receive the deduction information returned by the digital currency operator and output and display the deduction information by means of a device such as a visual screen.

As at least one alternative embodiment, after the step of receiving deduction information generated after the digital currency operator executes deduction on the basis of the interoperability-based transaction request, the method further includes following operations. a balance, a recharge amount, a deduction amount, a type of the digital currency wallet and a transaction type identifier in the deduction information are acquired; and the balance, the recharge amount, the deduction amount, the type of the digital currency wallet and the transaction type identifier are displayed on a visual screen.

Understandably, the execution body may display any one or more of the balance, the recharge amount, the deduction amount, the type of the digital currency wallet, and the transaction type identifier on the visual screen, and all of which do not need to be displayed. The execution body may also acquire display requirement configuration information of the user, and display one or more pieces of corresponding information in the balance, the recharge amount, the deduction amount, the type of the digital currency wallet, and the transaction type identifier according to the display requirement configuration information of the user. The balance is an amount left after deduction of the digital currency wallet executing deduction.

The example of the present disclosure provides the digital currency transaction method. The method uses a quasi-account mode digital currency based on a hardware carrier, currency strings are stored in the background of the digital currency operator, and merely an accepted terminal needs to be on network during transaction. The problems of currency string storage and user privacy protection are solved. The user anonymously handles the digital currency wallet of the present disclosure, i.e. the quasi-account mode digital currency hardware wallet, at the digital currency operator or an agent side.

The digital currency wallet of the example of the present disclosure is consumed by touching on the POS terminal, and supports small-amount password-free payment on the basis of the NFC protocol. During touched consumption, a card display screen may display a current transaction amount. The POS terminal reads information in the hardware carrier and sends the information to a background system to make a payment request, the background completes deduction processing and returns a result to the POS terminal in an original way, and the POS terminal makes a collection result prompt. When the hardware wallet establishes a connection relation with the POS terminal, feature negotiation is needed firstly. The hardware wallet may select the fast transaction model by means of the feature negotiation operator, thereby shortening transaction time.

According to the example, the transaction request is received in response to the connection to the digital currency wallet, and the feature negotiation information is acquired from the hardware carrier of the digital currency wallet; the transaction type is determined on the basis of the feature negotiation information; the deduction amount corresponding to the transaction request is acquired, and the interoperability-based transaction request is generated on the basis of the deduction amount and the feature negotiation information in response to determining that the transaction type is the interoperability-based transaction; the interoperability-based transaction request is sent to the interoperability platform, so as to invoke the corresponding operator interface by means of the interoperability platform to send the interoperability-based transaction request to the corresponding digital currency operator; and the deduction information generated after the digital currency operator executes deduction on the basis of the interoperability-based transaction request is received and output. The feature negotiation information is acquired from the hardware carrier of the digital currency wallet, and the transaction type is determined on the basis of the feature negotiation information. On the basis of the transaction type, the request is forwarded between a front end and a terminal background, and the transaction request is executed. The digital currency wallet that does not establish an association relation between the identity of the user and the value of the digital currency in the account is used. Moreover, the digital currency wallet uses a security chip as the storage medium, the single offline transaction may be performed on the POS terminal, and tiled reading and writing management may be performed by means of the terminal. Limitations of capacity and an algorithm capability of front-end currency string storage are solved.

Fig. 6 is a schematic diagram of a main flow of a digital currency transaction method according to Example 2 of the present disclosure. As shown in Fig. 6, the digital currency transaction method includes:
S601, a transaction request is received in response to a connection to a digital currency wallet, and feature negotiation information is acquired from a hardware carrier of the digital currency wallet.
S602, a transaction type is determined on the basis of the feature negotiation information.
S603, a deduction amount corresponding to the transaction request is acquired.
S604, an interoperability-based transaction request is generated on the basis of the deduction amount and the feature negotiation information in response to determining that the transaction type is an interoperability-based transaction.
S605, the interoperability-based transaction request is sent to an interoperability platform, so as to invoke a corresponding operator interface by means of the interoperability platform to send the interoperability-based transaction request to a corresponding digital currency operator.

The principles of S601 to S605 are similar to those of S101 to S104, which are not repeated herein.

As another implementation of the example of the present disclosure, before the step of sending the interoperability-based transaction request to an interoperability platform, the method further includes following operations.

Whether the deduction amount exceeds a password-free limit is determined, and a password input interface is displayed under the condition that the deduction amount exceeds the password-free limit. A password input by a user is acquired, and the acquired password is verified; and
a sending process of the interoperability-based transaction request or a sending process of the same-operator transaction request is executed in response to the verification passes.

Before sending the interoperability-based transaction request to the interoperability platform, an execution body may determine whether the deduction amount exceeds the password-free limit set by the user. If the deduction amount exceeds the password-free limit set by the user, a user is needed to input a hardware wallet payment password at a POS terminal for further payment verification. After the verification passes, the sending process of the interoperability-based transaction request or the sending process of the same-operator transaction request is executed, and then the transaction request is sent to the digital currency operator for deduction processing.

S606, deduction information generated after the digital currency operator executes deduction on the basis of the interoperability-based transaction request is received, and the deduction information is output.

The principle of S606 is similar to that of S105, which is not repeated herein.

S607, a same-operator transaction request is generated in response to determining that the transaction type is a same-operator transaction.

When determining that the operator identifiers are consistent on the basis of the feature negotiation information, the execution body may determine that the transaction type is the same-operator transaction, and the same-operator transaction request is generated. That is, a transaction request that is directly sent to the corresponding digital currency operator without passing through the interoperability platform is generated.

S608, the same-operator transaction request is sent to a corresponding digital currency operator.

After generating the same-operator transaction request, the execution body may send the same-operator transaction request to the digital currency operator corresponding to an operator identifier in the feature negotiation information.

S609, deduction information generated after the digital currency operator executes deduction on the basis of the same-operator transaction request is received, and the deduction information is output.

After the same-operator transaction request is sent to the corresponding digital currency operator, the deduction information returned by the corresponding digital currency operator may be received. The deduction information may include information such as a balance of the digital currency wallet, an identifier of the operator, a deduction amount, etc. The execution body may output the deduction information in a form of voice broadcast, or output the deduction information by means of a display screen. The output mode of the deduction information is not specifically limited in the example of the present disclosure.

According to the example of the present disclosure, the transaction request is correspondingly generated according to the transaction type determined by the feature negotiation information, and deduction of the digital currency wallet is executed by means of the interoperability platform or by directly sending the transaction request to the corresponding digital currency operator, without manually selecting the sending mode of the transaction request offline, such that the deduction of the digital currency wallet can be smarter and faster.

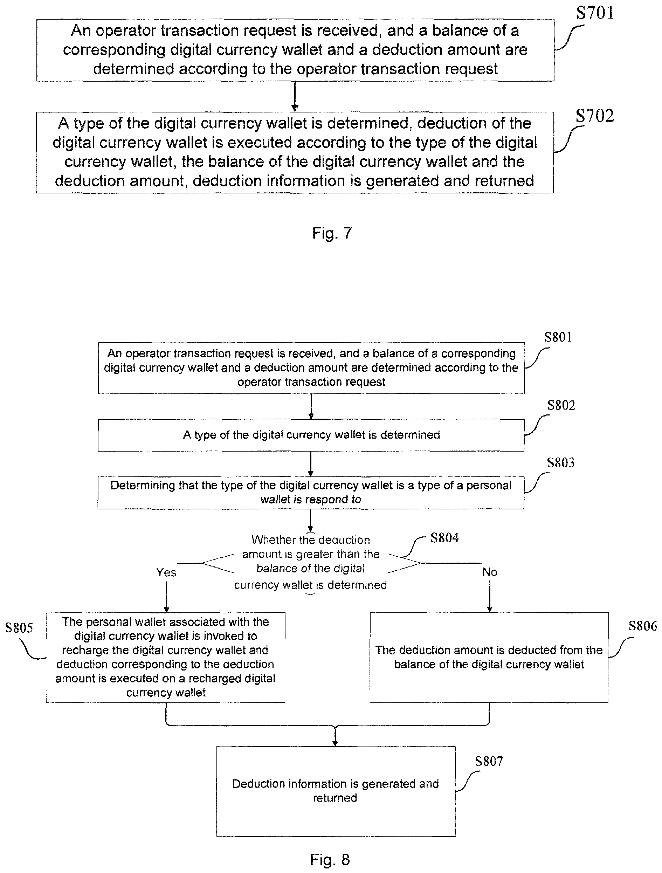

Fig. 7 is a schematic diagram of a main flow of a digital currency transaction method according to Example 3 of the present disclosure. As an example of the present disclosure, as shown in Fig. 7, the digital currency transaction method is applied to a digital currency operator, and may include following operations.

S701, an operator transaction request is received, and a balance of a corresponding digital currency wallet and a deduction amount are determined according to the operator transaction request.

An execution body of the example of the present disclosure is a digital currency operator. After receiving the operator transaction request, the digital currency operator needs to determine the deduction amount corresponding to the operator transaction request and the balance of the corresponding digital currency wallet.

S702, a type of the digital currency wallet is determined, deduction of the digital currency wallet is executed according to the type of the digital currency wallet, the balance of the digital currency wallet and the deduction amount, deduction information is generated and returned.

After receiving the operator transaction request, the digital currency operator needs to determine whether a terminal or an interoperability platform sends the transaction request. A specific determination mode may be as follows: a sender identifier in the operator transaction request is acquired. For example, the sender identifier may be POS and HLHT, which identify a POS terminal and the interoperability platform respectively. A specific name of a sender of the request may be determined according to the sender identifier. After the sender of the request is determined, whether the transaction type is a same-operator transaction or an interoperability-based transaction may be determined, and a corresponding transaction type identifier is generated and saved for later use.

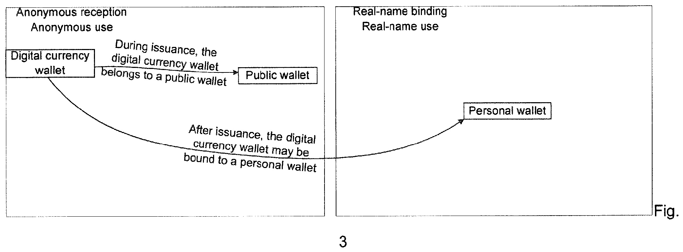

After receiving the operator transaction request, the digital currency operator further needs to determine the type of the digital currency wallet and determine whether the digital currency wallet is a digital currency wallet received and used anonymously or a digital currency wallet bound and used by real name. Exemplarily, as shown in Fig. 3, the digital currency wallet received and used anonymously belongs to a public wallet during issuance, and the digital currency wallet bound and used by real name is bound to a personal wallet after issuance. The definition of the public wallet is that legal persons and unincorporated operators determine transaction and a balance limit according to counter opening or remote opening, and customization is supported according to user requirements. The definition of the personal wallet is that natural persons and individual industrial and commercial units use classified transactions and balance limit management according to customer identification intensity. The digital currency wallet may be handled and used anonymously during issuance, such that the user may choose to bind a real name during use. For example, the real name may be bound in a form of one key by means of a mobile phone client APP, which is convenient and fast. The digital currency wallet may be recharged and managed anytime and anywhere.

As at least one alternative embodiment, the type of the digital currency wallet may further include a first-type wallet (no limit), a second-type wallet (a single limit of 50,000, which is only exemplary, and is not limited in the example of the present disclosure), a third-type wallet (a single limit of 5000, which is only exemplary, and is not limited in the example of the present disclosure), and a four-type wallet (a single limit of 2000, which is only exemplary, and is not limited in the example of the present disclosure). The type of the digital currency wallet may further include a parent wallet (primary wallet, which is similar to a money box), and a child wallet (secondary wallet, which is opened under the parent wallet, and is similar to a money bag).

A personal sub-wallet supports functions such as limit payment, conditional payment, and personal privacy protection; and a corporate sub-wallet supports functions such as fund attribution and distribution, accounting processing, and financial management). The type of the digital currency wallet may further be divided into a soft wallet (a carrier of the soft wallet may be an APP, a Software Development Kit (SDK), etc.) and a hard wallet (a carrier of the hard wallet may be an Integrated Circuit (IC) card, a wearable device, an Internet of Things device, etc.). The hard wallet is a wallet having a hardware carrier, i.e. the digital currency wallet emphatically described in the example of the present disclosure.

The digital currency wallet (i.e. quasi-account mode digital currency hardware wallet) in the present disclosure provides a digital currency wallet that records a value of a digital currency in a form of an account and does not establish an association relation between an identity of a user and the value of the digital currency in the account. Moreover, the digital currency wallet uses a security chip as a storage medium, may perform a single offline transaction on a POS terminal, and may perform tiled reading and writing management by means of a mobile phone client. Limitations of capacity and an algorithm capability of front-end currency string storage are solved, and the use problem of a mobile phone of the user without a network side can also be solved. Moreover, the user may select to use the digital currency wallet anonymously or use the digital currency wallet in the form of the real name to fully safeguard privacy rights and interests of the user.

When the digital currency wallet is the digital currency wallet received and used anonymously, the digital currency wallet is bound to the public wallet, and a balance of the public wallet may be customized according to the user requirements. When the balance of the public wallet in the digital currency operator is insufficient to pay a deduction amount, balance deficiency deduction information is returned to a terminal. The balance deficiency deduction information includes difference information between the deduction amount and the balance of the public wallet, so as to prompt the user using the terminal to recharge the public wallet on the basis of the difference information. In response to detecting a successful recharge identifier to the public wallet, deduction of a recharged public wallet is initiated on the basis of the deduction amount again. In response to successful deduction, deduction success information and the transaction type identifier are returned to the terminal.

Compared with other products, the quasi-account mode digital currency hardware wallet in the example of the present disclosure is unregistered during issuance and may be used anonymously, thereby better satisfying privacy protection rights and interests of the user. The quasi-account mode digital currency wallet has fewer requirements on hardware apparatuses of both receipt and payment parties, which do not need to support a high-speed algorithm processing capability and a large-capacity storage space, and is more convenient to promote and expand. Compared with other peripheral products such as cards, tiled reading and writing management can be performed on the digital currency wallet of the example of the present disclosure, thereby improving convenience of use.

Fig. 8 is a schematic diagram of a main flow of a digital currency transaction method according to Example 4 of the present disclosure. As an example of the present disclosure, as shown in Fig. 8, the digital currency transaction method is applied to a digital currency operator, and may include following operations.

S801, an operator transaction request is received, and a balance of a corresponding digital currency wallet and a deduction amount are determined according to the operator transaction request.

S802, a type of the digital currency wallet is determined.

S803, determining that the type of the digital currency wallet is a type of a personal wallet is responded.

When determining that the type of the digital currency wallet is a type of a personal wallet, the digital currency operator determines the personal wallet as a parent wallet of the digital currency wallet, and uses the digital currency wallet as a child wallet of the parent wallet. The parent wallet may recharge the child wallet.

S804, whether the deduction amount is greater than the balance of the digital currency wallet is determined.

The deduction amount is an amount of deduction requested by the operator transaction request. The balance of the digital currency wallet may be a remaining amount in the digital currency wallet opened by a purchaser. The digital currency operator may determine whether the deduction amount is greater than the balance of the digital currency wallet to determine whether to further recharge the digital currency wallet, so as to satisfy successful deduction requirements.

S805, the personal wallet (the personal wallet is a corresponding parent wallet) associated with the digital currency wallet is invoked to recharge the digital currency wallet and deduction corresponding to the deduction amount is executed on a recharged digital currency wallet under the condition that the deduction amount is greater than the balance of the digital currency wallet.

When the execution body determines that the deduction amount is greater than the balance of the digital currency wallet, it is indicated that the balance of the digital currency wallet is insufficient to pay the deduction amount, and therefore the deduction amount needs from the parent wallet bound and under the parent wallet.

S806, the deduction amount is deducted from the balance of the digital currency wallet under the condition that the deduction amount is not greater than the balance of the digital currency wallet.

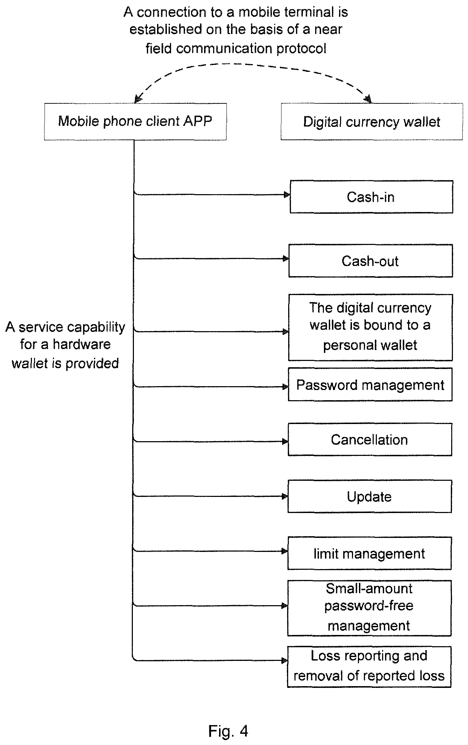

The digital currency wallet of the example of the present disclosure supports tiling (which may be based on an NFC technology and a Bluetooth connection technology) to the terminal (for example, a mobile phone client APP) to establish a binding relation with the personal wallet. After the digital currency wallet is bound to the personal wallet, a quasi-account mode is changed into an account mode. After binding, a parent-child ownership relation is established between the digital currency wallet and the personal wallet. The personal wallet is a corresponding parent wallet, and the digital currency wallet is a child wallet. As shown in Fig. 4, the digital currency operator may provide a service capability for the hardware wallet (i.e. the digital currency wallet in the present disclosure) by means of the mobile phone client APP, such as binding the child wallet to the parent wallet, executing password management, cancellation, update, limit management, small-amount password-free management, loss reporting and removal of reported loss, etc. on the child wallet, and also supporting cash-in or cash-out to the parent wallet. A single wallet of the digital currency wallet of the embodiment of the present disclosure has a balance upper limit requirement, and may be used for small-amount password-free payment or large-amount password-verification payment. After being bound to the personal wallet, the digital currency wallet may follow the limit of the parent wallet.

When determining that the balance of the digital currency wallet is insufficient to pay the deduction amount, the digital currency operator may invoke the parent wallet corresponding to the digital currency wallet to recharge, and then continue to deduct after recharging. After recharging, when the deduction amount is greater than the sum of the balance of the corresponding parent wallet and the balance of the digital currency wallet, deduction failure information and a transaction type identifier may be returned to the terminal. After recharging, when the balance of the digital currency wallet is greater than the deduction amount, deduction of the recharged digital currency wallet is performed on the basis of the deduction amount, and deduction success information and a transaction type identifier may be returned to the terminal.

S807, deduction information is generated and returned.

As at least one alternative embodiment, the step of generating deduction information includes following operations. A sender identifier corresponding to the operator transaction request is acquired, and a transaction type identifier is generated according to the sender identifier; a balance of the digital currency wallet after the deduction is executed and a recharge amount are determined; and the deduction information is generated according to the balance, the recharge amount, the deduction amount, the type of the digital currency wallet and the transaction type identifier, and the deduction information is returned. For example, the deduction information may be returned to the terminal.

As another example of the present disclosure, the digital currency wallet in the present disclosure is a physical wallet in which a value of a digital currency is recorded in the form of an account and an association code is stored in a hardware carrier. The association code in the hardware carrier is used as a verification certificate during transaction. The digital currency wallet is issued without a user name and does not establish an association relation between an identity of the user and the value of the digital currency in the account. The digital currency wallet belongs to the public wallet, which serve as a node for asset traceability and management. The digital currency wallet has a separate wallet balance, which comes from the parent wallet to which the digital currency wallet belongs and bank cards bound to the parent wallet. The digital currency wallet may be consumed by touching on the POS terminal, and a connection is established by means of an NFC protocol. The digital currency wallet may be used at a checkout counter online, the connection is established by means of an NFC technology, the connection is established by means of an NFC read-write module of the mobile phone client, or a wallet number may also be input as a payment voucher sent to a background. The digital currency wallet supports a feature negotiation mechanism. Before the hardware wallet executes transaction, the feature negotiation mechanism is added to carry out version negotiation, interactive capability parameter exchange and subsequent function expansion. Features of this transaction between both parties are determined by means of negotiation, and the features may include: parameters of expression version information, application version information, a transaction model, a terminal type, a networking capability, etc. The hardware wallet may select a fast transaction model by means of a feature negotiation process. A carrier of the digital currency wallet supports information display on a visual screen, and a transaction amount may be displayed back on the visual screen during transaction on a terminal device. The digital currency wallet uses an application transaction counter (ATC)+1 mechanism in transaction. That is, the transaction counter of each transaction is unique, and the counter is increased by one after each transaction, which is used as a determination basis for multi-terminal consistency during transaction. The digital currency wallet may be bound to the personal wallet. During binding, whether the digital currency wallet and the personal wallet are the same operator wallet is verified by means of a wallet code identity (ID), and whether the digital currency wallet exceeds a wallet limit needs to be determined. After binding, the hardware wallet may be basically managed by means of the parent wallet. Basic managements include basic management functions such as withdrawal and return of a digital currency, password management, limit setting, loss reporting and removal of reported loss, etc. An amount management of the digital currency wallet needs to satisfy the conditions: the sum of the balance of the parent wallet and balances of all quasi-account mode hardware wallets should be less than or equal to an upper limit of the balance of the parent wallet, the parent wallet should recharge the quasi-account mode hardware wallet within a payment limit of the parent wallet, and the transaction of the quasi-account mode hardware wallet is not be included in the payment limit of the parent wallet. The digital currency wallet supports small-amount password-free payment, a password-free limit is stored in a background, and a user may operate opening or closure at a client side. The transaction within the password-free limit does not need to verify a wallet payment password. For the transaction exceeding the password-free limit, the user is needed to input the wallet payment password on a payee terminal device. The digital currency wallet uses a national password SM2/SM3/SM4 algorithm. A key is stored in a hardware carrier according to a principle of "one card and one key". A wallet association code and transaction amount information are encrypted through the key, and then transmitted to a background of the digital currency operator for verification and deduction.

According to the example of the present disclosure, the value of the digital currency is recorded in the form of the account, the association code of the digital currency wallet is stored in the hardware carrier, the association relation between the identity of the user and the value of the digital currency in the account is not established when the digital currency wallet is issued, the digital currency wallet may be recharged by means of the parent wallet associated, and a consumption amount may be displayed back on the display screen during consumption on the terminal. After reading the association code in the hardware carrier of the digital currency wallet, an acceptance terminal (for example, POS terminal or mobile phone client APP) sends the transaction application request to the background of the digital currency operator, and the background of the digital currency operator performs encryption processing on the transaction application request to obtain a message, and sends the message to a payment operator. After receiving the message, the payment operator decrypts the message, completes deduction processing, and returns a result to the acceptance terminal. The digital currency wallet (i.e. quasi-account mode hardware wallet) may establish the connection to the mobile client APP by means of tiling, and the digital currency wallet (carrying the hardware carrier) may be managed by means of reading and writing of the mobile client. Near field communication is abbreviated as NFC. Digital renminbi: the digital renminbi is a legal currency issued by the People's Bank of China in a digital form, is operated by a designated operator, supports a loose coupling function of a bank account on the basis of a generalized account system, is equivalent to physical renminbi and has value features and legal compensation. Exemplarily, the mobile phone client establishes a link to the hardware carrier by means of the NFC protocol and sends a specific application protocol data unit (APDU, which is an information unit transmitted between a smart card and a smart card reader) command, sends an encrypted message to the hardware carrier in the digital currency wallet. After receiving the encrypted message, the hardware carrier performs corresponding processing and returns an encrypted result message to the mobile phone client. The mobile phone client sends a result to the background of the digital currency operator. After decrypting the message, the background of the digital currency operator performs corresponding deduction processing, and returns a deduction result to the mobile phone client, and the mobile phone client gives a prompt to the user after parsing the deduction result, or send the deduction result to the hardware carrier of the digital currency wallet again. Certainly, the mobile phone client may also be replaced with the POS terminal. The type of the terminal is not specifically limited in the example of the present disclosure.

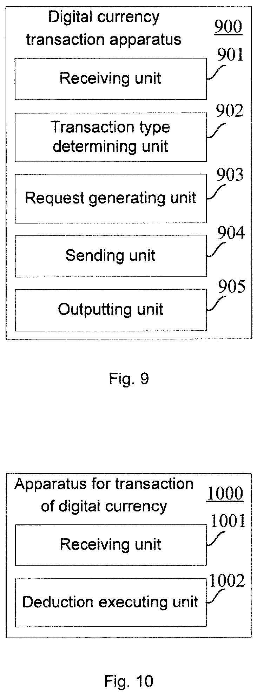

Fig. 9 is a schematic diagram of main units of a digital currency transaction apparatus according to an example of the present disclosure. As shown in Fig. 9, the apparatus for transaction of a digital currency includes a receiving unit 901, a transaction type determining unit 902, a request generating unit 903, a sending unit 904 and an outputting unit 905.

The receiving unit 901 is configured to receive a transaction request in response to a connection to a digital currency wallet, and acquire feature negotiation information from a hardware carrier of the digital currency wallet.

The transaction type determining unit 902 is configured to determine a transaction type on the basis of the feature negotiation information.

The request generating unit 903 is configured to acquire a deduction amount corresponding to the transaction request, and generate an interoperability-based transaction request on the basis of the deduction amount and the feature negotiation information in response to determining that the transaction type is an interoperability-based transaction.

The sending unit 904 is configured to send the interoperability-based transaction request to an interoperability platform, so as to invoke a corresponding operator interface by means of the interoperability platform to send the interoperability-based transaction request to a corresponding digital currency operator.

The outputting unit 905 is configured to receive deduction information generated after the digital currency operator executes deduction on the basis of the interoperability-based transaction request, and output the deduction information.

In some examples, the request generating unit 903 is further configured to generate a same-operator transaction request in response to determining that the transaction type is a same-operator transaction; the sending unit 904 is further configured to send the same-operator transaction request to a corresponding digital currency operator; and the outputting unit 905 is further configured to: receive deduction information generated after the digital currency operator executes deduction on the basis of the same-operator transaction request, and output the deduction information.

In some examples, the apparatus further includes a verifying unit not shown in Fig. 9. The verifying unit is configured to: determine whether the deduction amount exceeds a password-free limit, display a password input interface under the condition that the deduction amount exceeds the password-free limit, acquire a password input by a user, and verify the acquired password; and execute a sending process of the interoperability-based transaction request or a sending process of the same-operator transaction request in response to the verification passes.

In some examples, the apparatus further includes a connecting unit not shown in Fig. 9. The connecting unit is configured to: establish the connection to the digital currency wallet by means of an NFC protocol or a Bluetooth connection technology.

In some examples, the apparatus further includes a transaction model determining unit not shown in Fig. 9. The transaction model determining unit is configured to: send a feature negotiation request to the digital currency wallet; receive transaction parameters returned by the digital currency wallet; determine a corresponding transaction model on the basis of the transaction parameters; and execute a transaction process based on the transaction request on the basis of the transaction model.

In some examples, the apparatus further includes a displaying unit not shown in Fig. 9. The displaying unit is configured to: acquire a balance, a recharge amount, a deduction amount, a type of the digital currency wallet and a transaction type identifier in the deduction information; and display the balance, the recharge amount, the deduction amount, the type of the digital currency wallet and the transaction type identifier on a visual screen.

It should be noted that there is a corresponding relation between the digital currency transaction method and the apparatus for transaction of a digital currency of the present disclosure in specific implementations, so the repeated content will not be explained.

Fig. 10 is a schematic diagram of main units of a digital currency transaction apparatus according to an example of the present disclosure. As shown in Fig. 10, the digital currency transaction apparatus includes a receiving unit 1001 and a deduction executing unit 1002.

The receiving unit 1001 is configured to receive an operator transaction request, and determine a balance of a corresponding digital currency wallet and a deduction amount according to the operator transaction request; and
the deduction executing unit 1002 is configured to determine a type of the digital currency wallet, execute deduction of the digital currency wallet according to the type of the digital currency wallet, the balance of the digital currency wallet and the deduction amount, generate and return deduction information.

In some examples, the deduction executing unit 1002 is further configured to: determine whether the deduction amount is greater than the balance of the digital currency wallet in response to determining that the type of the digital currency wallet is a type of a personal wallet, and invoke the personal wallet associated with the digital currency wallet to recharge the digital currency wallet and execute deduction corresponding to the deduction amount on a recharged digital currency wallet under the condition that the deduction amount is greater than the balance of the digital currency wallet; and deduct the deduction amount from the balance of the digital currency wallet under the condition that the deduction amount is not greater than the balance of the digital currency wallet.

In some examples, the deduction executing unit 1002 is further configured to acquire a sender identifier corresponding to the operator transaction request, and generate a transaction type identifier according to the sender identifier; determine a balance and a recharge amount of the digital currency wallet after deduction is executed; and generate and return the deduction information according to the balance, the recharge amount, the deduction amount, the type of the digital currency wallet and the transaction type identifier.

It should be noted that there is a corresponding relation between the digital currency transaction method and the apparatus for transaction of a digital currency of the present disclosure in specific implementations, so the repeated content will not be explained.

Flow diagrams and block diagrams in the accompanying drawings illustrate system structures, functions and operations, which may be implemented according to systems, methods and computer programs in the various examples of the present disclosure. In this regard, each block in the flow diagrams or the block diagrams may represent a module, a program segment, or a part of a code, which may include one or more executable instructions configured to implement logical functions specified. It should also be noted that in some alternative implementations, functions noted in the blocks may also occur in sequences different from those in the accompanying drawings. For example, the functions represented by two continuous blocks may be actually implemented basically in parallel, sometimes implemented in reverse sequences, which depends on the involved functions. It should also be noted that each block in the block diagram and/or the flow diagram, and combinations of the blocks in the flow diagram and/or the block diagram, can be implemented by using dedicated hardware-based systems that execute specified functions or actions, or can be implemented by using combinations of dedicated hardware and computer instructions.

An example of the present disclosure further discloses a digital currency transaction electronic device. The digital currency transaction electronic device may include:
one or more processors; and
a storage apparatus, configured to store one or more programs, where
the one or more processors implement the method of any example described above when executing the one or more programs.

In a specific implementation, the digital currency transaction electronic device may be arranged on a POS terminal or a mobile phone client APP. A specific placement position of the digital currency transaction electronic device is not limited in the example of the present disclosure.

The units described in the examples of the present disclosure may be implemented in software or hardware. The described unit may also be arranged in the processor, for example, the described unit may be described as: a processor including a receiving unit, a transaction type determining unit, a request generating unit, a sending unit and an outputting unit. The names of these units do not constitute a limitation to the module itself in certain cases.

The units described in the examples of the present disclosure can be implemented in software or hardware. The described unit can also be arranged in the processor. For example, the described unit can be described as a processor including a receiving unit and a deduction executing unit. The names of these units do not constitute a limitation to the module itself in certain cases.

As another aspect, the present disclosure further provides a computer-readable medium. The computer-readable medium may be included in the device described in the example above, or exist separately without being assembled into the device. The computer-readable medium described above carries one or more programs, and when the one or more programs are executed by the device, the device implements the following method: receive a transaction request in response to a connection to a digital currency wallet, and acquire feature negotiation information from a hardware carrier of the digital currency wallet; determine a transaction type on the basis of the feature negotiation information; acquire a deduction amount corresponding to the transaction request, and generate an interoperability-based transaction request on the basis of the deduction amount and the feature negotiation information in response to determining that the transaction type is an interoperability-based transaction; send the interoperability-based transaction request to an interoperability platform, so as to invoke a corresponding operator interface by means of the interoperability platform to send the interoperability-based transaction request to a corresponding digital currency operator; and receive deduction information generated after the digital currency operator executes deduction on the basis of the interoperability-based transaction request, and output the deduction information. The computer-readable medium may include a read only memory (ROM), a random access memory (RAM), a magnetic disk, an optical disk, or a flash disk.

As another aspect, the present disclosure further provides a computer-readable medium. The computer-readable medium may be included in the device described in the example above, or exist separately without being assembled into the device. The computer-readable medium described above carries one or more programs, and when the one or more programs are executed by the device, the device implements the following method: receive an operator transaction request, and determine a balance of a corresponding digital currency wallet and a deduction amount according to the operator transaction request; and determine a type of the digital currency wallet, execute deduction of the digital currency wallet according to the type of the digital currency wallet, the balance of the digital currency wallet and the deduction amount, generate and return deduction information. The computer-readable medium may include a ROM, a RAM, a magnetic disk, an optical disk, or a flash disk.

According to the technical solution of the example of the present disclosure, the transaction request is received in response to the connection to the digital currency wallet, and the feature negotiation information is acquired from the hardware carrier of the digital currency wallet; the transaction type is determined on the basis of the feature negotiation information; the deduction amount corresponding to the transaction request is acquired, and the interoperability-based transaction request is generated on the basis of the deduction amount and the feature negotiation information in response to determining that the transaction type is the interoperability-based transaction; the interoperability-based transaction request is sent to the interoperability platform, so as to invoke the corresponding operator interface by means of the interoperability platform to send the interoperability-based transaction request to the corresponding digital currency operator; and the deduction information generated after the digital currency operator executes deduction on the basis of the interoperability-based transaction request is received and output. The feature negotiation information is acquired from the hardware carrier of the digital currency wallet, and the transaction type is determined on the basis of the feature negotiation information. On the basis of the transaction type, the request is forwarded between a front end and a terminal background, and the transaction request is executed. The digital currency wallet that does not establish an association relation between the identity of the user and the value of the digital currency in the account is used. Moreover, the digital currency wallet uses the security chip as the storage medium, the single offline transaction may be performed on the POS terminal, and tiled reading and writing management can be performed by means of the terminal. Limitations of capacity and an algorithm capability of front-end currency string storage are solved.

The above particular embodiments are not construed as limiting the scope of protection of the present disclosure. It should be understood by those skilled in the art that various modifications, combinations, sub-combinations, and substitutions can be made according to design requirements and other factors. Any modifications, equivalent substitutions, improvements, etc. within the spirit and principle of the present disclosure shall all fall within the scope of protection of the present disclosure.

## Claims

1. A digital currency transaction method, applied to a terminal, comprising:
receiving a transaction request in response to a connection to a digital currency wallet, and acquiring feature negotiation information from a hardware carrier of the digital currency wallet;
determining a transaction type on a basis of the feature negotiation information;
acquiring a deduction amount corresponding to the transaction request, and generating an interoperability-based transaction request on the basis of the deduction amount and the feature negotiation information in response to determining that the transaction type is an interoperability-based transaction;
sending the interoperability-based transaction request to an interoperability platform, so as to invoke a corresponding operator interface by means of the interoperability platform to send the interoperability-based transaction request to a corresponding digital currency operator; and
receiving deduction information generated after the digital currency operator executes deduction on a basis of the interoperability-based transaction request, and outputting the deduction information.

2. The method as claimed in claim 1, wherein before the generating an interoperability-based transaction request on the basis of the deduction amount and the feature negotiation information, the method further comprises:
generating a same-operator transaction request in response to determining that the transaction type is a same-operator transaction;
sending the same-operator transaction request to a corresponding digital currency operator; and
receiving deduction information generated after the digital currency operator executes deduction on a basis of the same-operator transaction request, and outputting the deduction information.

3. The method as claimed in claim 1 or 2, wherein before the sending the interoperability-based transaction request to an interoperability platform, the method further comprises:
determining whether the deduction amount exceeds a password-free limit, displaying a password input interface under a condition that the deduction amount exceeds the password-free limit, acquiring a password input by a user, and verifying the acquired password; and
executing a sending process of the interoperability-based transaction request or a sending process of the same-operator transaction request in response to a verification passes.

4. The method as claimed in claim 1, wherein before the receiving a transaction request, the method further comprises:
establishing the connection to the digital currency wallet by means of a near field communication protocol or a Bluetooth connection technology.

5. The method as claimed in claim 1, wherein after the receiving a transaction request, the method further comprises:
sending a feature negotiation request to the digital currency wallet;
receiving transaction parameters returned by the digital currency wallet;
determining a corresponding transaction model on a basis of the transaction parameters; and
executing a transaction process based on the transaction request on a basis of the transaction model.

6. The method as claimed in any one of claims 1-6, wherein after the receiving deduction information generated after the digital currency operator executes deduction on a basis of the interoperability-based transaction request, the method further comprises:
acquiring a balance, a recharge amount, a deduction amount, a type of the digital currency wallet and a transaction type identifier in the deduction information; and
displaying the balance, the recharge amount, the deduction amount, the type of the digital currency wallet and the transaction type identifier on a visual screen.

7. A digital currency transaction method, applied to a digital currency operator, comprising:
receiving an operator transaction request, and determining a balance of a corresponding digital currency wallet and a deduction amount according to the operator transaction request; and
determining a type of the digital currency wallet, executing deduction of the digital currency wallet according to the type of the digital currency wallet, the balance of the digital currency wallet and the deduction amount, generating and returning deduction information.

8. The method as claimed in claim 7, wherein the executing deduction of the digital currency wallet according to the type of the digital currency wallet, the balance of the digital currency wallet and the deduction amount comprises:
determining whether the deduction amount is greater than the balance of the digital currency wallet in response to determining that the type of the digital currency wallet is a type of a personal wallet, and
invoking a personal wallet associated with the digital currency wallet to recharge the digital currency wallet and executing deduction corresponding to the deduction amount on a recharged digital currency wallet under a condition that the deduction amount is greater than the balance of the digital currency wallet; and
deducting the deduction amount from the balance of the digital currency wallet under a condition that the deduction amount is not greater than the balance of the digital currency wallet.

9. The method as claimed in claim 7, wherein the generating deduction information comprises:
acquiring a sender identifier corresponding to the operator transaction request, and generating a transaction type identifier according to the sender identifier;
determining a balance and a recharge amount of the digital currency wallet after deduction is executed; and
generating and returning the deduction information according to the balance, the recharge amount, the deduction amount, the type of the digital currency wallet and the transaction type identifier.

10. A digital currency transaction apparatus, arranged in a terminal, comprising:
a receiving unit, configured to receive a transaction request in response to a connection to a digital currency wallet, and acquire feature negotiation information from a hardware carrier of the digital currency wallet;
a transaction type determining unit, configured to determine a transaction type on a basis of the feature negotiation information;
a request generating unit, configured to acquire a deduction amount corresponding to the transaction request, and generate an interoperability-based transaction request on a basis of the deduction amount and the feature negotiation information in response to determining that the transaction type is an interoperability-based transaction;
a sending unit, configured to send the interoperability-based transaction request to an interoperability platform, so as to invoke a corresponding operator interface by means of the interoperability platform to send the interoperability-based transaction request to a corresponding digital currency operator; and
an outputting unit, configured to receive deduction information generated after the digital currency operator executes deduction on a basis of the interoperability-based transaction request, and output the deduction information.

11. The apparatus as claimed in claim 10, wherein
the request generating unit is further configured to generate a same-operator transaction request in response to determining that the transaction type is a same-operator transaction;
the sending unit is further configured to send to a corresponding digital currency operator; and
the outputting unit is further configured to receive deduction information generated after the digital currency operator executes deduction on a basis of the same-operator transaction request, and output the deduction information.

12. The apparatus as claimed in claim 10 or 11, further comprising a verifying unit, configured to:
determine whether the deduction amount exceeds a password-free limit, display a password input interface under a condition that the deduction amount exceeds the password-free limit, acquire a password input by a user, and verify the acquired password; and
execute a sending process of the interoperability-based transaction request or a sending process of the same-operator transaction request in response to verification pass.

13. The apparatus as claimed in claim 10, further comprising a connecting unit, configured to:
establish the connection to the digital currency wallet by means of a near field communication protocol or a Bluetooth connection technology.

14. The apparatus as claimed in claim 10, further comprising a transaction model determining unit, configured to:
send a feature negotiation request to the digital currency wallet;
receive transaction parameters returned by the digital currency wallet;
determine a corresponding transaction model on a basis of the transaction parameters; and
execute a transaction process based on the transaction request on a basis of the transaction model.

15. The apparatus as claimed in any one of claims 10-14, further comprising a displaying unit, configured to:
acquire a balance, a recharge amount, a deduction amount, a type of the digital currency wallet and a transaction type identifier in the deduction information; and
display the balance, the recharge amount, the deduction amount, the type of the digital currency wallet and the transaction type identifier on a visual screen.

16. A digital currency transaction apparatus, arranged in a digital currency operator, comprising:
a receiving unit, configured to receive an operator transaction request, and determine a balance of a corresponding digital currency wallet and a deduction amount according to the operator transaction request; and
a deduction executing unit, configured to determine a type of the digital currency wallet, execute deduction of the digital currency wallet according to the type of the digital currency wallet, the balance of the digital currency wallet and the deduction amount, generate and return deduction information.

17. The apparatus as claimed in claim 16, wherein the deduction executing unit is further configured to:
determine whether the deduction amount is greater than the balance of the digital currency wallet in response to determining that the type of the digital currency wallet is a type of a personal wallet, and
invoke the personal wallet associated with the digital currency wallet to recharge the digital currency wallet and execute deduction corresponding to the deduction amount on a recharged digital currency wallet under a condition that the deduction amount is greater than the balance of the digital currency wallet; and
deduct the deduction amount from the balance of the digital currency wallet under a condition that the deduction amount is not greater than the balance of the digital currency wallet.

18. The apparatus as claimed in claim 16, wherein the deduction executing unit is further configured to:
acquire a sender identifier corresponding to the operator transaction request, and generate a transaction type identifier according to the sender identifier;
determine a balance and a recharge amount of the digital currency wallet after deduction is executed; and
generate and return the deduction information according to the balance, the recharge amount, the deduction amount, the type of the digital currency wallet and the transaction type identifier.

19. A digital currency transaction electronic device, comprising:
one or more processors; and
a storage apparatus, configured to store one or more programs, wherein
the one or more processors implement the method as claimed in any one of claims 1-9 when executing the one or more programs.

20. A computer-readable medium, storing a computer program, wherein the program implements the method as claimed in any one of claims 1-9 when executed by a processor.
